# EUROPÄISCHE PATENTSCHRIFT

(11) **EP 2 631 040 B1**
(45) Veröffentlichungstag und Bekanntmachung des Hinweises auf die Patenterteilung: **09.10.2019**
(21) Anmeldenummer: 13154002.3
(22) Anmeldetag: 05.02.2013
(51) Int. Cl.: B25J 5/00, B25J 19/02, B25J 5/04

(54) **Bearbeitungsstation und Verfahren zum Betreiben einer solchen**
Processing station and method for operating such a station
Station de traitement et procédé de fonctionnement d'une telle station

(30) Priorität: 23.02.2012 DE 102012003663
(43) Veröffentlichungstag der Anmeldung: 28.08.2013
(73) Patentinhaber: KUKA Deutschland GmbH, 86165 Augsburg (DE)
(72) Erfinder: Buchstab, Alois, 86391 Stadtbergen (DE)
(74) Vertreter: Schlotter, Alexander Carolus Paul

(56) Entgegenhaltungen:
- EP-A1- 2 090 506
- WO-A2-2010/043640
- DE-U1-202005 015 118
- US-A- 5 358 568

## Beschreibung

Die Erfindung betrifft einen mobilen Roboter, eine Bearbeitungsstation und ein Verfahren zum Betreiben eines mobilen Roboters.

Roboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen üblicherweise einen Roboterarm mit mehreren über Gelenke verbundene Glieder und programmierbare Steuerungen (Steuervorrichtungen) auf, die während des Betriebs die Bewegungsabläufe des Roboters steuern bzw. regeln. Die Glieder werden über Antriebe, insbesondere elektrische Antriebe, die von der Steuervorrichtung angesteuert werden, insbesondere bezüglich der Bewegungsachsen bewegt.

Die US 2010/0224427 A1 offenbart einen mobilen Roboter, welcher einen Industrieroboter und ein omnidirektionales Trägerfahrzeug aufweist, auf dem der Industrieroboter befestigt ist. Das omnidirektionale Trägerfahrzeug umfasst omnidirektionale Räder und Antriebe zum Bewegen der omnidirektionalen Räder. Der Industrieroboter umfasst einen Roboterarm mit mehreren, hintereinander angeordneten Gliedern und einen Steuerrechner zum Bewegen des Roboterarms.

Die EP 2 090 506 A1 offenbart eine Vorrichtung zum Bearbeiten von Schiffsrümpfen. Die Vorrichtung umfasst ein Trägerfahrzeug, an dem ein Roboter befestigt ist. Der Roboter kann horizontalen entlang des Trägerfahrzeugs bewegt werden. Bevor die Vorrichtung automatisiert den Schiffrumpf bearbeitetet, wird mittels eines Computers ein Mapping des Schiffrumpfes in den Roboter geladen. Um die Position des Roboters relativ zum Schiffsrumpf zu erhalten, sind im Rahmen des Schiffsrumpfes Positionssensoren angebracht, welche der Roboter zu detektieren vermag. Die Position des Roboters relativ zum Schiffrumpf kann auch mittels Triangulation erfolgen. Dadurch kann, sobald der Roboter nahe genug an den Schiffsrumpf bewegt wurde, dieser die nötigen Arbeitsschritte automatisiert durchführen.

Die WO2010/043640 A2 offenbart eine Bearbeitungsstation für Werkstücke, die mehrere Teilstationen mit zugeordneten Dockingstationen für einen mobilen Roboter mit einem an einem Trägerfahrzeug angeordneten Roboterarm aufweist.

Aufgabe der Erfindung ist es, eine verbesserte Bearbeitungsstation, die einen mobilen Roboter aufweist, bzw. ein verbessertes Verfahren zum Betreiben einer Bearbeitungsstation anzugeben.

Die Aufgabe der Erfindung wird gelöst durch eine Bearbeitungsstation gemäß Anspruch 1 und ein Verfahren gemäß Anspruch 8 zum Betreiben einer solchen Bearbeitungsstation.

Vorteilhafte Ausführungsformen der erfindungsgemäßen Bearbeitungsstation und des erfindungsgemäßen Verfahrens sind in den abhängigen Ansprüchen angegeben.

Der mobile Roboter der erfindungsgemäßen Bearbeitungsstation umfasst demnach das Trägerfahrzeug und den Roboterarm, der am Trägerfahrzeug befestigt ist. Mittels des Trägerfahrzeugs kann somit der Roboterarm als solches bewegt werden. Das Trägerfahrzeug wird z.B. mittels einer Batterie mit elektrischer Energie versorgt. Am Roboterarm ist das Werkzeug befestigt, insbesondere an der Befestigungsvorrichtung des Roboterarms, sodass mittels des mobilen Roboters das Werkstück automatisiert bearbeitet werden kann. Aufgrund des Trägerfahrzeugs ist es möglich, den mobilen Roboter an das Werkstück für dessen Bearbeitung insbesondere automatisch heran zu fahren. Insbesondere ist es vorgesehen, dass der mobile Roboter automatisch an eine vorgegebene Position an das Werkstück heranfährt, dort anhält und mit der Bearbeitung des Werkstücks beginnt. Vorzugsweise hält der mobile Roboter an der vorgegebenen Position in einer vorgegebenen Orientierung. Das Werkstück ist z.B. ein Rotorblatt eines Windkraftwerks oder ein Flügel eines Flugzeugs.

Der Roboterarm bzw. dessen Antriebe, die vorzugsweise als elektrische Antriebe, insbesondere als geregelte elektrische Antriebe ausgebildet sind, wird mittels der Steuervorrichtung derart angesteuert, dass der Roboterarm nach dem Heranfahren an das Werkstück automatisch das Werkstück mittels des Werkzeugs bearbeitet. Dazu läuft z.B. auf der Steuervorrichtung ein geeignetes Rechenprogramm, sodass die Steuervorrichtung z.B. basierend auf dem in der Steuervorrichtung gespeicherten mathematischen Modell das Werkstück bearbeiten kann. Das mathematische Modell vom Werkstück wurde beispielsweise aufgrund von dem Werkstück zugeordneten CAD-Daten erstellt.

Erfindungsgemäß wird vor dem Bearbeiten des Werkstücks und nach dem Anhalten des mobilen Roboters dessen Position oder Lage (Position und Orientierung) relativ zum Werkstück bestimmt. Dies erfolgt vorzugsweise mit der Vorrichtung zum optischen Erfassen des Werkstücks, welche Bestandteil des mobilen Roboters ist. Beispiele von Vorrichtungen zum optischen Erfassen des Werkstücks sind Kameras, insbesondere Stereokameras, Laserscanner oder Infrarotscanner. Mittels der Vorrichtung zum optischen Erfassen des Werkstücks kann wenigstens ein Bild, insbesondere ein dreidimensionales Bild vom Werkstück aufgenommen werden, aufgrund dessen Auswertens bzw. des Auswertens des dem Bild zugeordneten Bilddatensatzes der mobile Roboter seine Position, gegebenenfalls seine Lage relativ zum Werkstück bestimmen kann. Im Falle eines dreidimensionalen Bildes handelt es sich bei dem Bilddatensatz um einen dreidimensionalen Bilddatensatz.

Aufgrund der nun bekannten Position oder Lage des mobilen Roboters relativ zum Werkstück wird es diesem ermöglicht, basierend auf der Position bzw. Lage und des mathematischen Modells, das Werkstück automatisch zu bearbeiten. Folglich braucht der mobile Roboter gegebenenfalls die vorgegebene Position nicht exakt anzufahren, um das Werkstück zumindest zufriedenstellend bearbeiten zu können.

Vorzugsweise handelt es sich bei der Position oder Lage des mobilen Roboters um die Position oder Lage dessen Roboterarms, insbesondere die Position oder Lage eines Gestells des Roboterarms oder des Ursprungs eines dem Roboterarm zugeordneten Roboterbasiskoordinatensystems. Aufgrund dieser Kenntnis ist es der Steuervorrichtung möglich, aufgrund des mathematischen Modells des Werkstücks zumindest ausreichend genau das Werkstück mit dem Werkzeug anzufahren, um damit das Werkstück zu bearbeiten.

Nach einer Variante des erfindungsgemäßen Verfahrens bzw. der erfindungsgemäßen Bearbeitungsstation wird das mathematische Modell an das aktuell zu bearbeitende Werkstück aufgrund des ausgewerteten Bilddatensatzes angepasst. Dadurch wird automatisch das mathematische Modell, aufgrund dessen die Bearbeitung des Werkstücks erfolgt, an das aktuelle Werkstück angepasst, wodurch Vorraussetzungen einer verbesserten Bearbeitung des Werkstücks mittels des mobilen Roboters gegeben sind.

Je nach Ausführungsform des mobilen Roboters erfolgt ein intelligentes Zusammenspiel des mobilen Roboters sowohl mit Sensorik als auch mit den CAD-Daten des z.B. als Rotorblattes ausgebildeten Werkstücks (mathematisches Modell). Die realen Flügeldaten bzw. Bilddaten des Bilddatensatzes werden vorzugsweise mittels spezieller Scanner erfasst und mit den virtuellen Daten (mathematisches Modell) verglichen. Die virtuellen Daten werden insbesondere durch eine sogenannte Offlineprogrammierung erzeugt. Das Resultat dieses Vergleichs erzeugt z.B. eine neue, den realen Umständen entsprechende Geometrie. Der mobile Roboter wird daraufhin z.B. mit den neuen Bahndaten aktualisiert. Zugleich ist dieses Automatisierungskonzept vorzugsweise darauf ausgelegt, die Topographie des Werkstücks, z.B. Flügel oder Rotorblatt, zu berücksichtigen. Durch die Steuerung des Roboterarms über diese Sensoren entsteht gegebenenfalls ein Regelkreis, der hilft, die individuellen Abmessungen des Werkstücks, z.B. Rotors, zu berücksichtigen sowie Position und Form des Werkstücks relativ exakt zu erfassen.

Und durch den produktionsbegleitenden Vergleich mit den CAD-Daten können Konstruktion und Realität abgeglichen und Produktionsdatenbanken eingerichtet werden, die Aufschlüsse über die Fertigungsparameter geben.

Damit das Trägerfahrzeug sich automatisch bewegen kann, kann die Steuervorrichtung für den Roboterarm auch eingerichtet sein, die Antriebe des Trägerfahrzeugs derart anzusteuern, sodass dieses eine vorgegebene Bewegung ausführt. Es ist aber auch möglich, dass der mobile Roboter eine weitere Steuervorrichtung aufweist, welche mit der Steuervorrichtung kommuniziert und eingerichtet ist, die Antriebe des Trägerfahrzeugs derart anzusteuern, sodass dieses eine vorgegebene Bewegung ausführt.

Um den Arbeitsbereich des Roboterarms zu erweitern, kann vorzugsweise das Trägerfahrzeug eine Hubvorrichtung aufweisen, mittels der der Roboterarm insbesondere gesteuert durch die Steuervorrichtung oder die weitere Steuervorrichtung automatisch vertikal verfahrbar ist. Alternativ oder zusätzlich kann für einen erweiterten Arbeitsbereich des Roboterarms das Trägerfahrzeug derart ausgeführt sein, dass insbesondere gesteuert durch die Steuervorrichtung oder die weitere Steuervorrichtung der Roboterarm horizontal relativ zur Trägervorrichtung verfahrbar ist. Somit kann der Roboterarm vertikal und/oder horizontal linear verfahren werden.

Ein Vorteil der Hubvorrichtung auf dem Trägerfahrzeug kann sein, dass durch die integrierte Hubvorrichtung z.B. mit einer Plattform es möglich wird, eine Linearachse zum horizontalen Verfahren des Roboterarms inklusive dem Roboterarm in eine gewünschte Höhe zu positionieren, um auch Rotorblätter mit einer Sehnentiefe von bis zu 6m bearbeiten zu können. Auf der Plattform ist es dann möglich, sowohl die Steuervorrichtung, aber auch andere Prozesssteuerungen oder Werkzeugwechselsysteme für unterschiedliche Bearbeitungswerkzeuge zu lagern.

Die Bearbeitung des Werkstücks als solche erfolgt durch den Roboterarm, welcher vorzugsweise horizontal linear verfahrbar ist. Durch diese integrierte Linearachse ist es möglich, dass der Roboterarm je nach Länge dieser Linearachse (z.B. 6-10m Verfahrweg) die Oberfläche des Rotorblattes selbstständig bearbeitet.

Um die Mobilität des mobilen Roboters zu erhöhen, können die Räder als omnidirektionale Räder ausgeführt sein. Ein Beispiel eines omnidirektionalen Rades ist ein Mecanum-Rad. In diesem Fall handelt es sich bei dem Trägerfahrzeug um ein omnidirektionales Trägerfahrzeug, welches im Wesentlichen in alle Richtungen frei bewegbar ist. Mecanum-Räder sind dem Fachmann im Prinzip bekannt. Diese umfassen z.B. zwei starr miteinander verbundene Radscheiben, zwischen denen mehrere Rollkörper bezüglich ihrer Längsachsen drehbar gelagert sind. Die beiden Radscheiben können bezüglich einer Drehachse drehbar gelagert sein und mittels einer der Antriebe des Trägerfahrzeugs derart angetrieben werden, dass sich die beiden Radscheiben bezüglich der Drehachse drehen. Die Rollkörper sind vorzugsweise gleichmäßig zueinander beabstandet und derart an den Radscheiben gelagert, dass ihre Rollflächen über den Umfang der Radscheiben herausragen. Außerdem sind die Rollkörper vorzugsweise derart an den Radscheiben gelagert, dass ihre Längsachsen mit der Drehachse einen Winkel von beispielsweise 45° aufweisen. Ein Vorteil des als omnidirektionales Trägerfahrzeug ausgebildeten Trägerfahrzeugs ist die erhöhte Flexibilität des mobilen Roboters. Durch den Einsatz eines solchen mobilen Roboters ist es möglich, gezielt den mobilen Roboter an das Werkstück, z.B. einem Rotorblatt, zu bringen, ohne dass das Werkstück bzw. das Rotorblatt transportiert und in eine spezielle Station gebracht werden muss. Mit der erfindungsgemäßen Bearbeitungsstation wird das Rotorblatt stationsweise bearbeitet, beispielsweise sowohl Vorderals auch Rückseite des Rotorblatts. Zudem könnte man durch den Einsatz eines zweiten mobilen Roboters die Taktzeit halbieren, bzw. andere Bearbeitungsschritte damit erledigen. Es wäre sogar denkbar, den mobilen Roboter zwischen verschiedenen Fertigungshallen zu verfahren. Durch die Manövrierbarkeit des Trägerfahrzeugs mit omnidirektionalen Rädern ist es möglich, den Roboterarm entlang des Rotorblattes zu verfahren und pro Station z.B. über ein im Boden befindliches Andocksystem den Roboter inklusive der Prozesstechnik mit der notwendigen Energie zu versorgen. Es wären damit keine Stahl-, Beton- oder Fundamentarbeiten notwendig, welche zum einen sehr kostenintensiv und die Flexibilität der Anlage einschränken.

Um mit elektrischer Energie versorgt zu werden, kann der mobile Roboter mit wenigstens einer insbesondere aufladbaren Batterie ausgestattet sein.

Durch die Dockingstationen der erfindungsgemäßen Bearbeitungsstation wird es dem mobilen Roboter ermöglicht, mit elektrischer Energie versorgt zu werden, während er das Werkstück automatisch bearbeitet. Dadurch wird nicht nur die Batterie entlastet, sondern kann auch gleichzeitig wieder aufgeladen werden, sobald der mobile Roboter mit den Dockingstationen verbunden ist. Das Verbinden bzw. Andocken an die Dockingstationen kann manuell oder vorzugsweise automatisch erfolgen. Die Dockingstationen sind z.B. in den Boden integriert.

Die erfindungsgemäße Bearbeitungsstation ist bei relativ großen Werkstücken, wie z.B. einem Rotorblatt eines Windkraftwerks oder eines Flügels eines Flugzeugs, vorteilhaft, wenn der Arbeitsbereich des mobilen Roboters nicht ausreicht, das gesamte Werkstück von genau einer Position aus zu bearbeiten. Der mobile Roboter kann somit nacheinander die einzelnen Teilstationen anfahren, um das Werkstück stückchenweise zu bearbeiten. An jeder Teilstation kann er über die entsprechenden beiden Dockingstationen mit elektrischer Energie versorgt werden.

Dadurch, dass jede der Teilstationen genau zwei Dockingstationen aufweist, die derart angeordnet sind, dass sich der mobile Roboter, wenn er die entsprechende Teilstation angefahren hat, zwischen den beiden Dockingstationen der angefahrenen Teilstation befindet, können die entsprechenden zwei Dockingstationen gleichzeitig als Zentrierstationen dienen, damit der mobile Roboter verbessert eine für das Bearbeiten des Werkstücks vorgesehene Position anfahren kann.

Ein Ausführungsbeispiel der Erfindung ist exemplarisch in den beigefügten schematischen Zeichnungen dargestellt. Es zeigen:
- Fig. 1: einen mobilen Roboter mit einem Räder aufweisenden Trägerfahrzeug und einem am Trägerfahrzeug angeordneten Roboterarm,
- Fig. 2: den Roboterarm des mobilen Roboters,
- Fig. 3: ein omnidirektionales Rad und
- Fig. 4: eine Draufsicht einer Bearbeitungsstation.

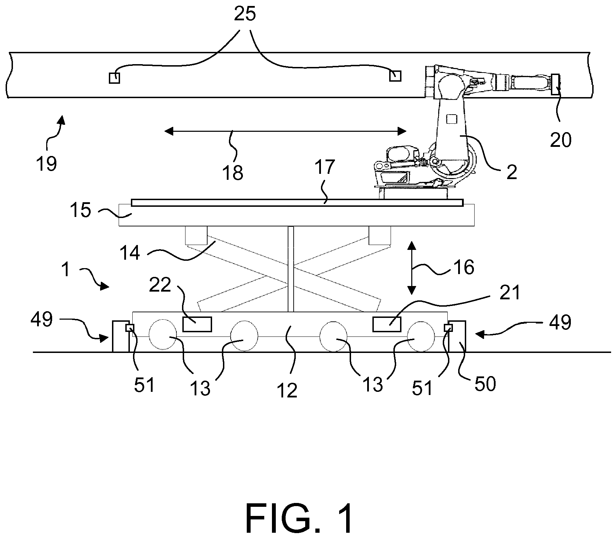

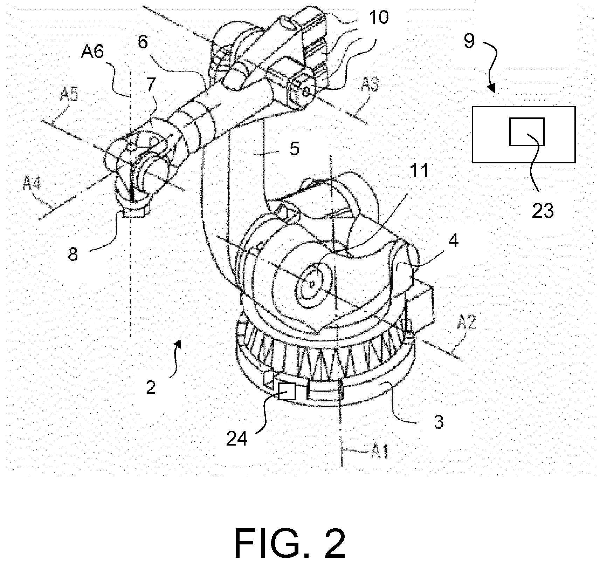

Die Fig. 1 zeigt einen mobilen Roboter, welcher ein Trägerfahrzeug 1 und einen am Trägerfahrzeug 1 befestigten Roboterarm 2 aufweist. Die Fig. 2 zeigt in einer perspektivischen Darstellung den Roboterarm 2.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Drehachsen A4, A5, A6.

Im Falle des vorliegenden Ausführungsbeispiels ist der mobile Roboter als ein autonomer mobiler Roboter ausgebildet, sodass die Steuervorrichtung 21 des Trägerfahrzeugs 1 die Antriebe für die Räder 13 derart ansteuert, sodass sich der mobile Roboter auf einer vorgegebenen bzw. vorgebbaren Strecke bzw. Bahn bewegt.

Der mobile Roboter umfasst eine Steuervorrichtung 9, um den Roboterarm 2 zu bewegen. Die Steuervorrichtung 9 ist mit Antrieben des Roboterarms 2 verbunden. Die Antriebe sind im Falle des vorliegenden Ausführungsbeispiels elektrische Antriebe, insbesondere geregelte elektrische Antriebe. In der Figur 2 sind nur einige der elektrischen Motoren 10, 11 dieser Antriebe gezeigt. Der Roboterarm 2 und die Steuervorrichtung 9 sind insbesondere als Standard Industrieroboter ausgeführt, der auf dem Trägerfahrzeug 1 befestigt ist.

Das Trägerfahrzeug 1 weist im Falle des vorliegenden Ausführungsbeispiels einen Fahrzeuggrundkörper 12 auf, an dem mehre Räder 13 drehbar angeordnet sind. Wenigstens eines der Räder 13, vorzugsweise alle Räder 13 wird bzw. werden mit einem oder mehreren Antrieben angetrieben. Die nicht näher dargestellten Antriebe sind vorzugsweise elektrische Antriebe, insbesondere geregelte elektrische Antriebe und sind mit der beispielsweise im oder am Fahrzeuggrundkörper 12 angeordneten Steuervorrichtung 21 verbunden, welche eingerichtet ist, das Trägerfahrzeug 1 durch entsprechendes Ansteuern der Antriebe für die Räder 13 automatisch zu bewegen. Die Steuervorrichtung 21 des Trägerfahrzeugs 1 ist insbesondere mit der Steuervorrichtung 9 für den Roboterarm 2 verbunden, sodass diese miteinander kommunizieren können. Es kann aber auch eine gemeinsame Steuervorrichtung für die Antriebe der Räder 13 und des Roboterarms 2 vorgesehen sein.

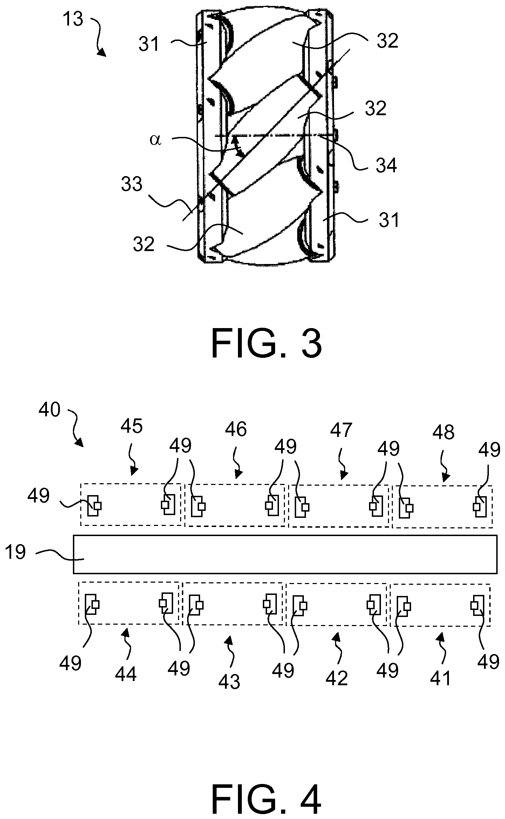

Das Trägerfahrzeug 1 ist vorzugsweise als ein omnidirektionales Trägerfahrzeug ausgebildet, weshalb die Räder 13 vorzugsweise als omnidirektionale Räder 13 ausgebildet sind. Ein Beispiel eines omnidirektionalen Rades ist das sogenannte Mecanum-Rad. Ein als omnidirektionales Rad ausgebildetes Rad 13 ist in der Fig. 3 als Frontansicht gezeigt.

Das als omnidirektionales bzw. Mecanum Rad ausgebildete Rad 13 weist im Falle des vorliegenden Ausführungsbeispiels zwei starr miteinander verbundene Radscheiben 31 auf, zwischen denen mehrere Rollkörper 32 bezüglich ihrer Längsachsen 33 drehbar gelagert sind. Die beiden Radscheiben 31 können bezüglich einer Drehachse 34 drehbar gelagert sein und mittels einer der Antriebe des Trägerfahrzeugs 1 derart angetrieben werden, dass sich die beiden Radscheiben 31 bezüglich der Drehachse 34 drehen.

Im Falle des vorliegenden Ausführungsbeispiels sind die Rollkörper 32 gleichmäßig zueinander beabstandet und derart an den Radscheiben 31 gelagert, dass ihre Rollflächen über den Umfang der Radscheiben 31 herausragen. Außerdem sind die Rollkörper 32 derart an den Radscheiben 31 gelagert, dass ihre Längsachsen 33 mit der Drehachse 34 einen Winkel α von beispielsweise 45° aufweisen.

Im Falle des vorliegenden Ausführungsbeispiels umfasst das Trägerfahrzeug 1 eine Hubvorrichtung 14, welche insbesondere am Fahrzeuggrundkörper 12 befestigt ist. An der vom Fahrzeuggrundkörper 12 abgewandten Seite der Hubvorrichtung 14 ist eine Trägervorrichtung 15 befestigt, deren Höhe mittels der Hubvorrichtung 14 verstellt werden kann. An der Trägervorrichtung 14 ist der Roboterarm 2 mit seinem Gestell 3 befestigt.

Der Hubvorrichtung 14 ist ein nicht näher dargestellter Antrieb zugeordnet, welcher insbesondere mit der Steuervorrichtung 9 für den Roboterarm 2 verbunden ist. Somit ist es der Steuervorrichtung 9 ermöglicht, die Hubvorrichtung 14 und somit die Trägervorrichtung 15 und mit dieser den Roboterarm 2, d.h. dessen Gestell 3 vertikal in Richtung eines Doppelpfeils 16 automatisch zu verstellen. Die Hubvorrichtung 14 realisiert somit eine vertikal ausgerichtete Linearachse, bezüglich derer der Roboterarm 2 vertikal verfahrbar ist.

Im Falle des vorliegenden Ausführungsbeispiels ist an der Trägervorrichtung 15 eine Längsschiene 17 angeordnet, auf der der Roboterarm 2 mit seinem Gestell 3 horizontal in Richtung eines Doppelpfeils 18 verschieblich gelagert ist. Der Längsschiene 17 ist ein weiterer, nicht näher dargestellter Antrieb zugeordnet, mittels dem der Roboterarm 2 bzw. dessen Gestell 3 entlang der Längsschiene 17 bezüglich des Doppelpfeils 18 automatisch horizontal verschiebbar ist. Dieser Antrieb ist insbesondere mit der Steuervorrichtung 9 für den Roboterarm 2 verbunden, sodass es der Steuervorrichtung 9 ermöglicht ist, den Roboterarm 2, d.h. dessen Gestell 3 horizontal in Richtung des Doppelpfeils 18 automatisch zu verstellen. Die Längsschiene 17 realisiert somit eine horizontal ausgerichtete Linearachse, bezüglich derer der Roboterarm 2 horizontal verfahrbar ist.

Im Falle des vorliegenden Ausführungsbeispiels umfasst der mobile Roboter noch wenigstens eine wieder aufladbare Batterie 22 als elektrische Energieversorgung.

Im Falle des vorliegenden Ausführungsbeispiels ist der mobile Roboter vorgesehen, ein Werkstück 19 automatisiert zu bearbeiten. Bei dem Werkstück 19 handelt es sich z.B. um ein Rotorblatt eines Windkraftwerks oder um einen Flügel eines Flugzeugs. Ein mittels des mobilen Roboters durchgeführter Bearbeitungsschritt des Werkstücks 19 ist z.B. ein Konturschleifen und/oder ein Trimmen von Kanten, das so genannte Besäumen, des Werkstücks 19. Um diesen Bearbeitungsschritt automatisiert durchzuführen, ist an der als Flansch 8 ausgeführten Befestigungsvorrichtung des Roboterarms 2 ein entsprechendes Werkzeug 20 befestigt.

Die Fig. 4 zeigt eine Bearbeitungsstation 40 zum Bearbeiten des Werkstücks 19 mittels des mobilen Roboters. Die Bearbeitungsstation 40 umfasst im Falle des vorliegenden Ausführungsbeispiels mehrere Teilstationen 41-48, die jeweils zwei Dockingstationen 49 aufweisen. Die Bearbeitungsstation 40 weist ferner eine nicht näher dargestellte Halterungsvorrichtung zum Haltern des Werkstücks 19 auf. Der mobile Roboter ist im Falle des vorliegenden Ausführungsbeispiels ausgeführt, automatisch die einzelnen Teilstationen 41-48 anzufahren, also zunächst die Teilstation 41, dann die Teilstation 42, usw., bis er die Teilstation 48 erreicht. Der mobile Roboter ist also im Falle des vorliegenden Ausführungsbeispiels als ein autonomer mobiler Roboter ausgebildet. Um die einzelnen Teilstationen 41-48 automatisch anzufahren, läuft auf der Steuervorrichtung 21 ein Rechenprogramm, sodass die Steuervorrichtung 21 des Trägerfahrzeugs 1 die Antriebe für die Räder 13 derart ansteuert, sodass sich der mobile Roboter auf einer vorgegebenen bzw. vorgebbaren Strecke bzw. Bahn bewegt. Für die automatische Bewegung des Trägerfahrzeugs 1 kann dieses auch eine nicht näher dargestellte optische Vorrichtung, wie z.B. wenigstens einen Laserscanner oder wenigstens eine Kamera, umfassen.

Im Falle des vorliegenden Ausführungsbeispiels ist der mobile Roboter und die Bearbeitungsstation 40 derart eingerichtet, dass wenn der mobile Roboter eine der Teilstationen 41-48 angefahren und an einer vorgegebenen Position bzw. Lage (Position und Orientierung) gehalten hat, sich die Dockingstationen 49 der entsprechenden Teilstation 41-48 mit dem Trägerfahrzeug 1 verbinden, um das Trägerfahrzeug 1, aber auch den Roboterarm 2 und dessen Steuervorrichtung 9 mit elektrischer Energie zu versorgen. Dazu weist im Falle des vorliegenden Ausführungsbeispiels jede der Dockingstationen 49 einen Grundkörper 50 und eine in den Grundkörper 50 automatisch einfahrbare und aus dem Grundkörper 50 ausfahrbare Kontaktvorrichtung 51 auf. Hält nun der mobile Roboter in einer der Teilstationen 41-48 an der vorgesehenen Position bzw. Lage an, so fahren automatisch die Kontaktvorrichtungen 51 der Dockingstationen 50 der entsprechenden Teilstation 41-48 aus, um nicht näher dargestellte, insbesondere am Fahrzeuggrundkörper 12 des Trägerfahrzeugs 1 angeordnete Gegenkontaktvorrichtungen zu kontaktieren. Die Dockingstationen 50 der einzelnen Teilstationen 41-48 können auch als Zentrierstationen dienen, in der die genaue Halteposition des Trägerfahrzeugs abgesteckt ist. Das Kontaktieren der Dockingstationen 49 mit dem mobilen Roboter kann auch manuell erfolgen. Über die Dockingstationen 49 kann auch die Batterie 22 wieder aufgeladen werden.

Nachdem der mobile Roboter in der gewünschten Teilstation 41-48 angehalten hat und mit den entsprechenden Dockingstationen 49 verbunden ist, ist der mobile Roboter bereit, mittels seines Roboterarms 19 und gesteuert durch die Steuervorrichtung 9 das Werkstück mittels des Werkzeugs 20 zu bearbeiten. Dazu läuft auf der Steuervorrichtung 9 ein geeignetes Rechenprogramm, mittels dem die Steuervorrichtung 9 die Antriebe des Roboterarms 2, der Hubvorrichtung 14 und der Längsschiene 17 sowie gegebenenfalls das Werkzeug 20 ansteuert. Steuert die Steuervorrichtung 21 die Antriebe der Hubvorrichtung 14 und/oder der Längsschiene 17 an, so übermittelt die Steuervorrichtung 9 der Steuervorrichtung 20 entsprechende Signale bzw. Anweisungen.

Im Falle des vorliegenden Ausführungsbeispiels ist die Steuervorrichtung 9 bzw. das auf dieser laufende Rechenprogramm derart ausgeführt, dass vor der Bearbeitung des Werkstücks 19 und nach dem Halten des mobilen Roboters in der gewünschten Teilstation 41-48 und dem Verbinden des mobilen Roboters mit den entsprechenden Dockingstationen 49 ein Referenzieren des Roboterarms 2 bzw. dessen Gestell 3 zum Werkstück 19 durchgeführt wird. Dadurch wird automatisch die genaue Lage des Roboterarms 2, insbesondere eines bestimmten Punktes des Roboterarms 2 relativ zum Werkstück 19 ermittelt.

Um dies zu erreichen, ist im Falle des vorliegenden Ausführungsbeispiels in der Steuervorrichtung 9 ein mathematisches Modell 23 vom Werkstück 19 gespeichert. Das mathematische Modell 23 ist vorzugsweise ein dreidimensionales Modell vom Werkstück 19 und/oder umfasst mehrere zweidimensionale Ansichten des Werkstücks 19.

Im Falle des vorliegenden Ausführungsbeispiels umfasst der mobile Roboter eine Vorrichtung 24 zum optischen Erfassen des Werkstücks z.B. in Form wenigstens eines optischen Scanner, wie z.B. eines Laser-Scanners, oder wenigstens einer Kamera, insbesondere einer Stereokamera. Die Vorrichtung 24 zum optischen Erfassen des Werkstücks ist mit der Steuervorrichtung 9 verbunden und z.B. im oder am Roboterarm 2, beispielsweise an dessen Gestell 3, angeordnet. Die Vorrichtung 24 zum optischen Erfassen des Werkstücks kann aber auch am Trägerfahrzeug 12, z.B. an dessen Fahrzeuggrundkörper 12 angeordnet sein.

Mittels der Vorrichtung 24 zum optischen Erfassen des Werkstücks bzw. deren Signale ist es dem mobilen Roboter ermöglicht, ein Bild des zu bearbeitenden realen Werkstücks 19 bzw. einen diesem Bild zugeordneten Bilddatensatz zu erstellen. Dazu nimmt z.B. die Vorrichtung 24 zum optischen Erfassen des Werkstücks mehrere Bilder vom Werkstück 19 auf. Für ein verbessertes Erkennen des Werkstücks 19 kann diese auch mit Markern 25 versehen sein.

Die Steuervorrichtung 9 bzw. das auf diesem laufenden Rechenprogramm ist derart ausgeführt, dass sie bzw. den dem zu bearbeitenden Werkstück 19 zugeordneten Bilddatensatz auswertet und mit dem mathematischen Modell 23 vergleicht, um insbesondere aufgrund dieser Auswertung die aktuelle Position bzw. Lage des Roboterarms 2, insbesondere dessen Gestell 3 oder eines Referenzpunkts, der insbesondere dem Ursprung eines Roboterbasiskoordinatensystems zugeordnet ist, relativ zum Werkstück 19 zu bestimmen. Aufgrund dieser Bestimmung ist es der Steuervorrichtung 9 möglich, den Ursprung des Roboterbasiskoordinatensystems der aktuellen Lage bzw. Position des mobilen Roboters anzupassen. Des Weiteren wird es der Steuervorrichtung 9 ermöglicht, aufgrund des dem zu bearbeitenden Bilddatensatzes das mathematische Modell 23 an das aktuell zu bearbeitende Werkstück 19 anzupassen.

Nach dem Abgleich des Roboterbasiskoordinatensystems und/oder des Anpassens des mathematischen Modells 23 an das real zu bearbeitende Werkstück 19 beginnt die Steuervorrichtung 9 den Roboterarm 2, die Hubvorrichtung 14 und das Werkzeug 20 anzusteuern und den Roboterarm 2 längs der Längsschiene 17 zu verschieben, um das Werkstück 19 zu bearbeiten.

Nachdem der mobile Roboter mit dem der aktuellen Teilstation 41-48 zugeordneten Bearbeitung des Werkstücks 19 fertig ist, werden automatisch die Kontaktiervorrichtungen 51 der Dockingstationen 49 dieser Teilstation 49 eingefahren und der mobile Roboter bewegt sich automatisch zur nächsten Teilstation 41-48, um das Bearbeiten des Werkstücks 19 fortzusetzen. Für den folgenden Bearbeitungsschritt erfolgt ebenfalls ein Verbinden der Dockingstationen 49 der nächsten Teilstation 41-48 mit dem mobilen Roboter und ein Vergleichen des mathematischen Modells 23 mit einem neu aufgenommenen Bilddatensatz, der dem Werkstück 19 zugeordnet ist.

Im Falle des vorliegenden Ausführungsbeispiels kann es noch vorgesehen sein, die Bilddatensätze in einer zentralen Datenbank zu speichern und auszuwerten, um beispielsweise dem mathematischen Modell 23 zugeordnete Daten mit den vom realen Werkstück 19 aufgenommenen Daten abzugleichen. Dadurch kann man z.B. Aufschlüsse über Fertigungsparameter des Werkstücks 19 erhalten.

## Patentansprüche

1. Bearbeitungsstation, aufweisend eine Halterungsvorrichtung zum Haltern eines Werkstücks (19), einen mobilen Roboter zum Bearbeiten des Werkstücks (19), und mehrere Teilstationen (41-48), welche jeweils genau zwei Dockingstationen (49) zum Versorgen des mobilen Roboters mit elektrischer Energie aufweisen, wobei der mobile Roboter aufweist:
- ein Trägerfahrzeug (1) mit mehreren Rädern (13) und Antrieben zum Antreiben der Räder (13),
- ein Werkzeug (20) zum Bearbeiten des Werkstücks (19),
- einen am Trägerfahrzeug (1) angeordneten Roboterarm (2), der mehrere, hintereinander angeordnete Glieder (3-7), eine Befestigungsvorrichtung (8) zum Befestigen des Werkzeugs (20) und Antriebe zum Bewegen der Glieder (3-7) aufweist,
- eine Vorrichtung (24) zum optischen Erfassen des Werkstücks, welche eingerichtet ist, einen einem Bild vom Werkstück (19) zugeordneten Bilddatensatz zu erstellen, und
- eine mit den Antrieben des Roboterarms (2) und der Vorrichtung (24) zum optischen Erfassen des Werkstücks verbundene Steuervorrichtung (9), die eingerichtet ist, den Bilddatensatz auszuwerten, um die Position oder Lage des mobilen Roboters relativ zum Werkstück (19) zu bestimmen, und die Antriebe des Roboterarms (2) derart anzusteuern, sodass das Werkzeug (20) aufgrund eines in der Steuervorrichtung (9) gespeicherten mathematischen Modells (23) vom Werkstück (19) und der ermittelten Position oder Lage automatisch bearbeitet, wobei der mobile Roboter eingerichtet ist, nacheinander die einzelnen Teilstationen (41-48) automatisch anzufahren, die entsprechenden beiden Dockingstationen (49) der angefahrenen Teilstation (41-48) zu kontaktieren, um im kontaktierten Zustand über die beiden Dockingstationen (49) mit elektrischer Energie versorgt zu werden, und nach dem Kontaktieren den Bilddatensatz aufzunehmen, um die Position oder Lage des mobilen Roboters relativ zum Werkstück (19) zu bestimmen und anschließend das Werkstück (19) zu bearbeiten, wobei die beiden Dockingstationen (49) jeder der Teilstationen (41-48) derart angeordnet sind, dass sich der mobile Roboter, wenn er die entsprechende Teilstation angefahren hat, zwischen den beiden Dockingstationen (49) der angefahrenen Teilstation (41-48) befindet.

2. Bearbeitungsstation nach Anspruch 1, bei der die Position oder Lage des mobilen Roboters die Position oder Lage dessen Roboterarms (2), insbesondere die Position oder Lage eines Gestells (3) des Roboterarms (2) oder des Ursprungs eines dem Roboterarm (2) zugeordneten Roboterbasiskoordinatensystems ist.

3. Bearbeitungsstation nach Anspruch 1 oder 2, wobei die Steuervorrichtung (9) des mobilen Roboters eingerichtet ist, aufgrund des ausgewerteten Bilddatensatzes das mathematische Modell (23) an das aktuell zu bearbeitende Werkstück (19) anzupassen.

4. Bearbeitungsstation nach einem der Ansprüche 1 bis 3, bei der die Steuervorrichtung (9) des mobilen Roboters eingerichtet ist, die Antriebe des Trägerfahrzeugs (1) derart anzusteuern, sodass dieses eine vorgegebene Bewegung ausführt, oder wobei der mobile Roboter eine weitere Steuervorrichtung (21) aufweist, welche mit der Steuervorrichtung (9) kommuniziert und eingerichtet ist, die Antriebe des Trägerfahrzeugs (1) derart anzusteuern, sodass dieses eine vorgegebene Bewegung ausführt.

5. Bearbeitungsstation nach einem der Ansprüche 1 bis 4, bei der das Trägerfahrzeug (1) eine Hubvorrichtung (14) aufweist, mittels der der Roboterarm (2) insbesondere gesteuert durch die Steuervorrichtung (9) vertikal verfahrbar ist, und/oder bei dem das Trägerfahrzeug (1) derart ausgeführt ist, dass insbesondere gesteuert durch die Steuervorrichtung (9) der Roboterarm (2) horizontal relativ zu einer Trägervorrichtung (15) verfahrbar ist.

6. Bearbeitungsstation nach einem der Ansprüche 1 bis 5, bei der die Räder omnidirektionale Räder (13), insbesondere Mecanum-Räder, sind.

7. Bearbeitungsstation nach einem der Ansprüche 1 bis 6, wobei die beiden Dockingstationen (49) der angefahrenen Teilstation als Zentrierstationen dienen.

8. Verfahren zum Betreiben einer Bearbeitungsstation nach einem der Ansprüche 1 bis 7, aufweisend folgende Verfahrensschritte:
- automatisches Heranfahren des mobilen Roboters an ein Werkstück (19), wobei der mobile Roboter ein Trägerfahrzeug (1) mit mehreren Rädern (13) und Antrieben zum Antreiben der Räder (13), und einen am Trägerfahrzeug (1) angeordneten Roboterarm (2) mit mehreren, hintereinander angeordneten Gliedern (3-7) und einer Befestigungsvorrichtung (8) aufweist, an der ein Werkzeug (20) befestigt ist,
- nach dem Heranfahren an das Werkstück (19), Anhalten des mobilen Roboters,
- nach dem Anhalten, Ermitteln der Position oder Lage des mobilen Roboters durch Aufnehmen und Auswerten eines einem Bild vom Werkstück (19) zugeordneten Bilddatensatzes, und
- automatisches Bearbeiten des Werkstücks (19) mittels des am Roboterarm (2) befestigten Werkzeugs (20) basierend auf einem mathematischen Modell (23) vom Werkstück (19) und der ermittelten Position oder Lage.

9. Verfahren nach Anspruch 8, bei dem die Position oder Lage des mobilen Roboters die Position oder Lage dessen Roboterarms (2), insbesondere die Position oder Lage eines Gestells (3) des Roboterarms (2) oder des Ursprungs eines dem Roboterarm (2) zugeordneten Roboterbasiskoordinatensystems ist.

10. Verfahren nach Anspruch 8 oder 9, aufweisend Anpassen des mathematischen Modells (23) an das aktuell zu bearbeitende Werkstück (19) aufgrund des ausgewerteten Bilddatensatzes.

11. Verfahren nach einem der Ansprüche 8 bis 10, wobei die beiden Dockingstationen (49) der angefahrenen Teilstation als Zentrierstationen dienen, damit der mobile Roboter verbessert eine für das Bearbeiten des Werkstücks (19) vorgesehene Position anfahren kann.

## Claims

1. A processing station comprising a holding device for holding a workpiece (19), a mobile robot for processing the workpiece (19), and a plurality of partial stations (41 - 48) each of which comprise exactly two docking stations (49) for supplying the mobile robot with electrical energy, wherein the mobile robot comprises:
- a carrier vehicle (1) having a plurality of wheels (13) and drives for driving the wheels (13),
- a tool (20) for processing the workpiece (19),
- a robot arm (2) which is arranged on the carrier vehicle (1) and which has a plurality of members (3 - 7) arranged in a sequential manner, a fastening device (8) for fastening the tool (20) and drives for moving the members (3 - 7),
- a device (24) for optically detecting the workpiece, which device is arranged to generate an image data set associated with an image of the workpiece (19), and
- a control device (9) which is connected to the drives of the robot arm (2) and to the device (24) for optically detecting the workpiece, the control device (9) being arranged to evaluate the image data set in order to determine the position or the orientation of the mobile robot relative to the workpiece (19) and to control the drives of the robot arm (2) in such a way that the tool (20) carries out the processing in an automatic manner on the basis of a mathematical model (23) of the workpiece (19), the mathematical model (23) of the workpiece (19) being stored in the control device (9), and on the basis of the position or the orientation which has been determined,
wherein the mobile robot is arranged to approach the individual partial stations (41 - 48) automatically, one after the other, to contact the corresponding two docking stations (49) of the partial station (41 - 48) which has been approached, in order to be supplied with electrical energy in the contacted state via the two docking stations (49), and to receive the image data set after the contacting, in order to determine the position or the orientation of the mobile robot relative to the workpiece (19) and subsequently to process the workpiece (19), wherein the two docking stations (49) of each of the partial stations (41 - 48) are arranged in such a way that, when the mobile robot has approached the corresponding partial station, it is located between the two docking stations (49) of the partial station (41 - 48) which has been approached.

2. The processing station according to claim 1, in which the position or the orientation of the mobile robot is the position or the orientation of its robot arm (2), in particular the position or the orientation of a frame (3) of the robot arm (2) or of the origin of a robot base coordinate system assigned to the robot arm (2).

3. The processing station according to claim 1 or 2, wherein the control device (9) of the mobile robot is arranged to adapt the mathematical model (23), on the basis of the evaluated image data set, to the workpiece (19) currently to be processed.

4. The processing station according to any one of the claims 1 to 3, in which the control device (9) of the mobile robot is arranged to control the drives of the carrier vehicle (1) in such a way that the latter executes a predetermined movement, or wherein the mobile robot comprises a further control device (21) which communicates with the control device (9) and is arranged to control the drives of the carrier vehicle (1) in such a way that the latter executes a predetermined movement.

5. The processing station according to any one of the claims 1 to 4, in which the carrier vehicle (1) comprises a lifting device (14) by means of which the robot arm (2) can be moved vertically, in particular in a manner controlled by the control device (9), and / or in which the carrier vehicle (1) is constructed in such a way that the robot arm (2) can be moved horizontally relative to a carrier device (15), in particular in a manner controlled by the control device (9).

6. The processing station according to any one of the claims 1 to 5, in which the wheels are omnidirectional wheels (13), in particular Mecanum wheels.

7. The processing station according to any one of the claims 1 to 6, wherein the two docking stations (49) of the partial station which has been approached serve as centering stations.

8. A method of operating a processing station in accordance with any one of the claims 1 to 7, comprising the following method steps:
- automatic approaching of the mobile robot to a workpiece (19), wherein the mobile robot comprises a carrier vehicle (1) with a plurality of wheels (13) and drives for driving the wheels (13), and a robot arm (2) arranged on the carrier vehicle (1) and comprising a plurality of members (3 - 7) arranged in a sequential manner, and a fastening device (8) to which a tool (20) is fastened,
- after approaching the workpiece (19), stopping the mobile robot,
- after stopping, determining the position or the orientation of the mobile robot by acquiring and evaluating an image data set associated with an image of the workpiece (19), and
- automatically processing the workpiece (19) by means of the tool (20) fixed to the robot arm (2) on the basis of a mathematical model (23) of the workpiece (19) and the position or the orientation which has been determined.

9. The method according to claim 8, in which the position or the orientation of the mobile robot is the position or the orientation of its robot arm (2), in particular the position or the orientation of a frame (3) of the robot arm (2) or of the origin of a robot base coordinate system associated with the robot arm (2).

10. The method according to claim 8 or 9, comprising adapting the mathematical model (23) to the workpiece (19) currently to be processed on the basis of the image data set which has been evaluated.

11. The method according to any one of the claims 8 to 10, wherein the two docking stations (49) of the partial station which has been approached serve as centering stations, so that the mobile robot can approach, in an improved manner, a position envisaged for the processing of the workpiece (19).

## Revendications

1. Station de traitement présentant un dispositif de support pour le support d'une pièce à usiner (19), un robot mobile pour le traitement de la pièce à usiner (19), et plusieurs stations partielles (41-48) qui présentent respectivement précisément deux stations d'accueil (49) pour l'alimentation du robot mobile en une énergie électrique, dans laquelle le robot mobile présente :
- un véhicule de support (1) avec plusieurs roues (13) et des entraînements pour l'entraînement des roues (13),
- un outil (20) pour le traitement de la pièce à usiner (19),
- un bras de robot (2) agencé sur le véhicule de support (1), qui présente plusieurs organes (3-7) agencés les uns derrière les autres, un dispositif de fixation (8) pour la fixation de l'outil (20) et des entraînements pour le déplacement des organes (3-7),
- un dispositif (24) pour la détection optique de la pièce à usiner, qui est aménagé afin de créer un jeu de données d'images associé à une image de la pièce à usiner (19), et
- un dispositif de commande (9) relié aux entraînements du bras de robot (2) et au dispositif (24) pour la détection optique de la pièce à usiner, qui est aménagé afin d'évaluer le jeu de données d'image afin de déterminer la position ou la situation du robot mobile par rapport à la pièce à usiner (19), et de commander les entraînements du bras de robot (2) de telle manière que l'outil (20) traite automatiquement en raison d'un modèle mathématique (23) enregistré dans le dispositif de commande (9) de la pièce à usiner (19) et de la position ou situation déterminée,
dans laquelle le robot mobile est aménagé afin de percuter automatiquement les stations partielles individuelles les unes après les autres (41-48) afin d'entrer en contact avec les deux stations d'accueil correspondantes (49) de la station partielle (41-48) percutée afin d'être alimenté à l'état en contact par les deux stations d'accueil (49) en énergie électrique, et après l'entrée en contact de recevoir le jeu de données d'image afin de déterminer la position ou situation du robot mobile par rapport à la pièce à usiner (19) et de traiter ensuite la pièce à usiner (19), dans lequel les deux stations d'accueil (49) de chacune des stations partielles (41-48) sont agencées de telle manière que le robot mobile lorsqu'il a percuté la station partielle correspondante, se trouve entre les deux stations d'accueil (49) de la station partielle percutée (41-48).

2. Station de traitement selon la revendication 1, pour laquelle la position ou situation du robot mobile est la position ou situation de son bras de robot (2), en particulier la position ou situation d'un bâti (3) du bras de robot (2) ou de l'origine d'un système de coordonnées de base de robot associé au bras de robot (2).

3. Station de traitement selon la revendication 1 ou 2, dans laquelle le dispositif de commande (9) du robot mobile est aménagé afin d'adapter en raison du jeu de données d'image évalué le modèle mathématique (23) à la pièce à usiner (19) à traiter actuellement.

4. Station de traitement selon l'une quelconque des revendications 1 à 3, dans laquelle le dispositif de commande (9) du robot mobile est aménagé afin de commander les entraînements du véhicule de support (1) de sorte que celui-ci réalise un mouvement prescrit, ou dans lequel le robot mobile présente un autre dispositif de commande (21) qui communique avec le dispositif de commande (9) et est aménagé afin de commander les entraînements du véhicule de support (1) de sorte que celui-ci réalise un mouvement prescrit.

5. Station de traitement selon l'une quelconque des revendications 1 à 4, dans laquelle le véhicule de support (1) présente un dispositif de levage (14) au moyen duquel le bras de robot (2) est déplaçable verticalement en particulier de manière commandée par le dispositif de commande (9), et/ou pour laquelle le véhicule de support (1) est réalisé de telle manière qu'en particulier de manière commandée par le dispositif de commande (9) le bras de robot (2) soit déplaçable horizontalement par rapport à un dispositif de support (15).

6. Station de traitement selon l'une quelconque des revendications 1 à 5, dans laquelle les roues sont des roues omnidirectionnelles (13), en particulier des roues Mecanum.

7. Station de traitement selon l'une quelconque des revendications 1 à 6, dans laquelle les deux stations d'accueil (49) de la station partielle percutée servent de stations de centrage.

8. Procédé de fonctionnement d'une station de traitement selon l'une quelconque des revendications 1 à 7, présentant les étapes de procédé suivantes :
- l'approche automatique du robot mobile d'une pièce à usiner (19), dans lequel le robot mobile présente un véhicule de support (1) avec plusieurs roues (13) et des entraînements pour l'entraînement des roues (13), et un bras de robot (2) agencé au niveau du véhicule de support (1) avec plusieurs organes (3-7) agencés les uns derrière les autres et un dispositif de fixation (8), auquel un outil (20) est fixé,
- après l'approche de la pièce à usiner (19), l'arrêt du robot mobile,
- après l'arrêt, la détermination de la position ou situation du robot mobile par la réception et l'évaluation d'un jeu de données d'image associé à une image de la pièce à usiner (19), et
- le traitement automatique de la pièce à usiner (19) au moyen de l'outil (20) fixé au bras de robot (2) sur la base d'un modèle mathématique (23) de la pièce à usiner (19) et la position ou situation déterminée.

9. Procédé selon la revendication 8, pour lequel la position ou situation du robot mobile est la position ou situation de son bras de robot (2), en particulier la position ou situation d'un bâti (3) du bras de robot (2) ou de l'origine d'un système de coordonnées de base de robot associé au bras de robot (2).

10. Procédé selon la revendication 8 ou 9, présentant l'adaptation du modèle mathématique (23) à la pièce à usiner (19) à traiter actuellement en raison du jeu de données d'image évalué.

11. Procédé selon l'une quelconque des revendications 8 à 10, dans lequel les deux stations d'accueil (49) de la station partielle percutée servent de stations de centrage, afin que le robot mobile puisse percuter de manière améliorée une position prévue pour le traitement de la pièce à usiner (19).
